**Europäisches Patentamt**

**European Patent Office**

**Office européen des brevets**

(11) Veröffentlichungsnummer: **0 108 713**
**B1**

(12) **EUROPÄISCHE PATENTSCHRIFT**

(45) Veröffentlichungstag der Patentschrift:
**20.11.86**

(21) Anmeldenummer: **83810460.2**

(22) Anmeldetag: **06.10.83**

(51) Int. Cl.⁴: **C 08 K 5/53**, C 08 K 5/52,
C 08 L 75/04, C 08 L 79/04,
C 08 J 9/00

(54) **Feuerhemmende Zusammensetzungen.**

(30) Priorität: **12.10.82 GB 8229075**

(43) Veröffentlichungstag der Anmeldung:
**16.05.84 Patentblatt 84/20**

(45) Bekanntmachung des Hinweises auf die Patenterteilung:
**20.11.86 Patentblatt 86/47**

(84) Benannte Vertragsstaaten:
**AT BE CH DE FR GB IT LI NL SE**

(56) Entgegenhaltungen:
**DE - A - 2 452 357**
**DE - A - 2 610 180**
**DE - B - 1 569 428**
**GB - A - 1 146 173**
**GB - B - 1 146 173**
**US - A - 3 400 085**
**US - A - 4 165 411**

(73) Patentinhaber: **CIBA-GEIGY AG, Klybeckstrasse 141,
CH-4002 Basel (CH)**

(72) Erfinder: **Buszard, David Lewitt, Dr., 30 Bridle Road,
Woodford Cheshire SK7 1QJ (GB)**
Erfinder: **Dellar, Richard John, Dr., 17 Cleveland Road,
Hale Altrincham, Cheshire WA15 8AY (GB)**

ACTORUM AG

## Beschreibung

Vorliegende Erfindung betrifft feuerhemmende Zusammensetzungen zur Verwendung in harten Polyurethanen und Polyisocyanuraten oder Gemengen davon.

Polyurethane werden üblicherweise dadurch feuerhemmender gemacht, dass man den zur Herstellung des Polyurethans verwendeten Reaktionspartnern eine phosphorhaltige Verbindung, eine halogenhaltige Verbindung oder ein Gemisch davon zusetzt. Eine weithin verwendete phosphorhaltige Verbindung ist Dimethyl-methylphosphonat (DMMP). Wenn DMMP für sich in Polyurethanschäumen eingesetzt wird, treten jedoch verschiedene Verarbeitungsprobleme auf, die Hohlräume, Spalten und Verzerrung des Schaums verursachen. Um solche Probleme auszuschalten oder zumindest zurückzudrängen, wird die DMMP-Menge normalerweise auf etwa 3 Gew.-% des Schaums begrenzt. Eine andere schon vorgeschlagene Möglichkeit (U.S. Patentschrift Nr. 3 509 076) besteht darin, das DMMP und das Polyol teilweise durch eine reaktionsfähige Phosphorverbindung mit mindestens zwei aktiven Wasserstoffatomen pro Molekül, wie eine oxyalkylierte Dialkylpyrophosphorsäure, zu ersetzen.

DMMP wird normalerweise durch eine Arbuzov-Umlagerungsreaktion von Trimethylphosphit in Gegenwart eines Katalysators wie Methyljodid und nachfolgende fraktionierte Destillation zur Abtrennung von unverändertem Trimethylphosphit hergestellt. Damit das DMMP keinen unangenehmen Geruch nach Trimethylphosphit aufweist, muss die Menge Trimethylphosphit im destillierten DMMP weniger als 1 ppm betragen. Dies erfordert eine sorgfältige Reinigung.

Eine weitere, anstelle von DMMP verwendbare Verbindung ist das Äthylanalog, Diäthyl-äthylphosphonat (DEEP). Dieses wird nach einem ähnlichen Verfahren wie DMMP hergestellt und weist ebenfalls einen durch die Gegenwart von Triäthylphosphit verursachten Geruch auf.

Wird bei dem Verfahren ein Gemisch aus Methanol und Äthanol eingesetzt, so ist das entstehende Produkt ein DMMP und DEEP zusammen mit etwas Diäthyl-methylphosphonat und Dimethyl-äthylphosphonat enthaltendes Gemisch. Ein solches Gemisch wird ferner geringe Mengen Trimethylphosphit und Triäthylphosphit enthalten, und es ist ebenfalls erfindungsgemäss verwendbar. Es versteht sich dabei, dass unter dem Begriff Gemische von DMMP und DEEP auch solche zu verstehen sind, die Diäthyl-methylphosphonat und Dimethyl-äthylphosphonat einschliessen.

Es wurde nun eine Zusammensetzung entwikkelt, bei der die mit der Verwendung von DMMP allein verbundenen Probleme ausgeschaltet oder auf ein Mindestmass zurückgedrängt sind, die eine neutrale, nichtreaktionsfähige Cokomponente verwendet und es ferner ermöglicht, rohe Phosphonate zu verwenden, welche Trimethylphosphit und/oder Triäthylphosphit in Mengen bis zu etwa 2% enthalten.

Gegenstand vorliegender Erfindung sind dementsprechend feuerhemmende Zusammensetzungen für harte Polyurethane oder Polyisocyanurate, welche dadurch gekennzeichnet sind, dass sie aus Dimethyl-phosphonat, Diäthyläthylphosphonat oder einem Gemisch davon und einem Triarylphosphat, Trialkylphosphat oder Tri(Aryl/Alkyl)phosphat (im folgenden kurz Aryl/Alkylphosphat genannt) im Gewichtsverhältnis 95:5 bis 5:95 bestehen.

Als Arylgruppen in den Triarylphosphaten und Alkyl/Arylphosphaten kann gegebenenfalls durch Alkylgruppen mit bis zu 9 Kohlenstoffatomen einfach oder mehrfach substituiertes Phenyl vorliegen, wie Phenyl-, Kresyl-, Xylyl-, Isopropylphenyl-, t-Butylphenyl- und Nonylphenylgruppen.

Die Alkylgruppen in den Trialkylphosphaten und Alkyl/Arylphosphaten können geradkettig oder verzweigt sein und weisen bis zu 12 Kohlenstoffatome auf, wie Methyl, Äthyl, Butyl, Octyl, Isodecyl und Dodecyl.

Als in den erfindungsgemässen Zusammensetzungen verwendete Phosphate kommen solche in Betracht, die zur Verwendung als Flammhemmstoffe in Polyurethanen bekannt sind, wie Trimethylphosphat, Triäthylphosphat, Tributylphosphat, Trioxtylphosphat, Trikresylphosphat, Trixylylphosphat, die alkylierten Phenylphosphate wie in der britischen Patentschrift Nr. 1 446 173 beschrieben sowie Diphenyl-alkylphosphate wie Diphenyl-isodecylphosphat und Octyl-diphenylphosphat.

Die eingesetzten Phosphate sind vorzugsweise Triarylphosphate.

Es gibt verschiedene Herstellungsmethoden für Phosphatester, doch beruhen diese sämtlich auf demselben Verfahrenstyp. Ein Verfahren zur Herstellung von Phosphatestern wird in der britischen Patentschrift 1 146 173 beansprucht. Dies besteht darin, dass man Phenol mit einem zwei bis sechzehn Kohlenstoffatome pro Molekül enthaltenden Alkylierungsmittel zusammenbringt und das alkylierte Phenolprodukt mit einem Phosphorylierungsmittel zu einem Triarylphosphatester oder einem Gemisch von zwei oder mehr solchen Estern umsetzt, wobei der Anteil Alkylierungsmittel im Bereich von 5 bis 65 Gew.-%, bezogen auf das Gewicht des Phenols, mit dem es in Berührung gebracht wird, beträgt.

Alkyldiarylphosphate lassen sich durch Umsetzen von 2 Molanteilen Phenol mit einem Molanteil Phosphoroxychlorid in Gegenwart eines Aluminiumchloridkatalysators und nachfolgende Reaktion mit einem Alkohol herstellen.

Es wurde nun überraschenderweise gefunden, dass beim Vermischen der nach einem der eben beschriebenen Verfahren hergestellten Phosphate, die nicht 100% rein sind, mit einem etwas Trimethylphosphit und/oder Triäthylphosphit enthaltenden Phosphonat oder Gemisch von Phosphonaten das Trimethylphosphit und/oder Triäthylphosphit zersetzt wird und dessen Geruch verschwindet. Dadurch entfällt die Notwendigkeit einer fraktionierten Destillation des Phosphonats.

Die Desodorisierung erfolgt üblicherweise innerhalb 48 Stunden, wobei die eigentliche Zeit von der Menge des vorliegenden Trimethylphosphits, der Menge des eingesetzten Phosphats und der Temperatur abhängt. Die erforderliche Zeit ist manchmal nicht länger als 12 Stunden. Irgendeine Temperatur bis zum Siedepunkt des Phosphonats ist anwendbar, und der Wert des Phosphonat/Phosphatverhältnisses kann wie oben angegeben sein.

Die Desodorisierung kann in Glas-, Kunststoff- oder Metallbehältern sowohl in Gegenwart als auch in Abwesenheit von Licht und Luft erfolgen.

Die Herstellung der erfindungsgemässen feuerhemmenden Zusammensetzungen ist dadurch gekennzeichnet, dass man Dimethyl-methylphosphonat, Diäthyl-äthylphosphonat oder ein Gemisch davon und ein Triarylphosphat, Trialkylphosphat oder Alkyl/Arylphosphat vermischt und nötigenfalls das Gemisch genügend lang bei einer Temperatur unterhalb seines Siedepunktes hält, um jeglichen Geruch nach Trimethylphosphit und/oder Triäthylphosphit zu entfernen.

Vorzugsweise hält man das Gemisch bei einer Temperatur zwischen Raumtemperatur und 70 °C.

Die erfindungsgemässen Zusammensetzungen sind geruchlose, farblose Flüssigkeiten, die in den üblichen, bei der Herstellung von Polyurethanen und Polyisocyanuraten verwendeten Polyolen leicht löslich sind.

Die erfindungsgemässen Zusammensetzungen können ferner weitere flammhemmende Verbindungen enthalten, insbesondere halogenhaltige Verbindungen, wie aliphatische und aromatische bromhaltige Verbindungen oder Chloralkylphosphate. Beispiele für geeignete Verbindungen sind Pentabromidphenyläther, Dibromkresyl-glycidyläther (den man normalerweise in Form eines Isomerengemischs erhält), Tetrabrombisphenol A, Dibromneopentylglykol und Tris-(monochlorpropyl)-phosphat.

Die Menge des weiteren flammhemmenden Zusatzes kann über einen weiten Bereich schwanken und zwischen 3 und 100 Gew.-%, bezogen auf das Gewicht der erfindungsgemässen Zusammensetzung, liegen. Der Zusatz solcher Hilfsstoffe, insbesondere der halogenhaltigen, bringt eine weitere Verbesserung der flammhemmenden Eigenschaften des Polyurethans oder Polyisocyanurats, wie der Sauerstoffindex und die Strahlungswärmeprüfung nach BS 476 Teil 7 zeigt.

Polyurethane und Polyisocyanurate werden durch Umsetzung eines Polyols mit einem Polyisocyanat hergestellt, und zwar in Gegenwart eines Treibmittels, wenn ein Schaum erwünscht ist. Zur Herstellung des erwünschten Produkts wird die Polyisocyanatmenge variiert. Vorliegende Erfindung ist auf den gesamten Bereich von Polymeren mit einem Isocyanatindex von 1 bis 2, vorzugsweise von 1 bis 1,5, z.B. von 1,2 bis 1,4, anwendbar.

Die Einarbeitung der erfindungsgemässen Zusammensetzungen in die Polyurethane oder Polyisocyanurate erfolgt dadurch, dass man sie den Vorstufen vor oder während der Bildung der Polymeren zusetzt. Vorzugsweise wird die flammhemmende Zusammensetzung mit dem hydroxylgruppenhaltigen Bestandteil (Polyester- oder Polyäther-polyol) vor dessen Umsetzung mit dem Polyisocyanatbestandteil vermischt.

Die Geschwindigkeit der Schaumbildung und -aushärtung wird durch die flammhemmenden Zusammensetzungen nicht erheblich beeinflusst, so dass die Schäumvorgänge in normalen herkömmlichen Apparaturen durchgeführt werden können. Die physikalischen Eigenschaften des Schaums werden durch den Zusatz dieser flammhemmenden Zusammensetzungen kaum verändert.

Gegenstand der Erfindung ist demnach auch ein Verfahren zur Herstellung von Polyurethan- oder Polyisocyanuratschäumen durch Umsetzung eines Polyols mit einem Polyisocyanat gegebenenfalls in Gegenwart eines Treibmittels, welches dadurch gekennzeichnet ist, dass man einem Reaktionspartner oder dem Reaktionsgemisch eine aus Dimethyl-methylphosphonat, Diäthyl-äthylphosphonat oder einem Gemisch davon und einem Triarylphosphat, Trialkylphosphat oder Aryl/Alkylphosphat im Gewichtsverhältnis 5:95 bis 95:5, vorzugsweise von 10:90 bis 40:60, enthaltende feuerhemmende Zusammensetzung zusetzt.

Die eingesetzte Menge feuerhemmende Zusammensetzung kann 5 bis 40, vorzugsweise 10 bis 30, Gewichtsteile auf 100 Teile Polymer betragen.

Die bei der Herstellung des Polyurethans oder Polyisocyanurats verwendeten Isocyanate und Polyole können solche sein, wie sie aus dem Stand der Technik bekannt sind.

Das Isocyanat ist vorzugsweise eine Flüssigkeit, wie Toluylen-diisocyanat und Methylendiphenyl-diisocyanat, hydriertes Methylendiphenyl-diisocyanat, Hexamethylen-diisocyanat und Isophoron-diisocyanat.

Das Polyol kann eine polyfunktionelle aktive Wasserstoffverbindung sein, die sich von der Umsetzung einer Polyhydroxylverbindung wie Glycerin, Saccharose, Sorbit, Triäthanolamin oder einem Amin wie Äthylendiamin, einem aromatischen Polyamin oder einer aromatischen Mannich-Base mit Propylen- und/oder Äthylenoxyd ableitet.

Die Umsetzung zwischen dem Isocyanat und dem Polyol erfolgt normalerweise in Gegenwart eines Katalysators, eines Tensids und gegebenenfalls eines Treibmittels.

Als Katalysatoren eignen sich basische Katalysatoren wie Natriumhydroxyd, Natriumacetat, tertiäre Amine oder tertiäre Amine freisetzende Stoffe, wie Trimethylamin, Triäthylendiamin, N-Methylmorpholin, N,N-Dimethylcyclohexylamin und N,N-Dimethylaminoäthanol. Weitere Katalysatoren sind Metallverbindungen, wie Dibutylzinn-dilaurat, Zinn-II-octoat und Kaliumoctoat, 2,4,6-Tris-(N,N-dimethylaminomethyl)-phenol und 1,3,5-Tris- (N,N-dimethyl-3-aminopropyl)-s-hexahydrotriazin.

Die Verwendung geringer Mengen eines Tensids trägt zur Emulgierung des Polyols, Wassers und Isocyanats bei, ergibt bessere Dispergierung des Katalysators und Treibmittels und unterstützt die Bildung von Bläschen und deren Stabilisierung während der Schaumbildung. Als Tenside eignen sich Polydimethylsiloxan oder Polydimethylsiloxan/Polyalkylencopolymere.

Geeignete Treibmittel sind inerte, niedrigsiedende Flüssigkeiten, zu denen halogenierte Kohlenwasserstoffe wie Dichlordifluormethan, Trichlorfluormethan, Methylenchlorid und Kohlenwasserstoffe zählen. Auch kann das Treibmittel ganz oder teilweise durch chemische Reaktionen entstehen, wie während des Schäumverfahrens ablaufen, wie als Folge des Zusatzes von Wasser, das mit dem Polyisocyanat unter Freisetzung von Kohlendioxyd reagiert.

Mit den erfindungsgemässen Zusammensetzungen entfallen die mit der Verwendung von DMMP allein verbundene Probleme, d.h. die Bildung von Hohlräumen, Spalten und Verzerrung, z.B. Werfen. Das Phosphat ermöglicht es, grössere Mengen DMMP einzusetzen, ohne dass diese Probleme auftreten.

Bei Verwendung gewisser Mannichbasen von Aminopolyolen zur Polyurethanherstellung kann manchmal Versengen auftreten. Diese Neigung zum Versengen ist beim Einsatz der erfindungsgemässen Zusammensetzungen verringert.

Weitere durch die Anwendung der erfindungsgemässen Zusammensetzungen erzielbare Vorteile sind verbessertes Fliessverhalten des Schaumgemischs vor der Gelierung, verbesserte Oberflächeneffekte in Spritzsystemen sowie die Möglichkeit, höherschäumende Schaumstoffblöcke herzustellen.

Die nachfolgenden Beispiele dienen der Erläuterung der Erfindung, wobei Teile und Prozentangaben Gewichtsteile und Gewichtsprozente sind.

Beispiel 1

Man gibt 10 Teile rohes, 1% Trimethylphosphit enthaltendes Dimethyl-methylphosphonat (DMMP) zu 90 Teilen Tris-(isopropylphenyl)phosphat, wie in der britischen Patentschrift Nr. 1 146 173 beschrieben mit einem Phosphoranteil von 8,4%. Nach 12–14 Stunden Stehenlassen bei Raumtemperatur in einer Glasflasche ist kein Geruch nach Trimethylphosphit mehr feststellbar.

Beispiel 2

Man wiederholt Beispiel 1, wobei jedoch das Gemisch bei 70 °C gehalten wird. Vor Ablauf von 12 Stunden wird das Gemisch geruchlos.

Beispiel 3

Bei ähnlicher Arbeitsweise wie in Beispiel 1 erfordern 20 Teile desselben rohen DMMP in 80 Teilen des Phosphat 36–42 Stunden bei Raumtemperatur bis zur Geruchlosigkeit.

Beispiel 4

Man erhitzt ein Gemisch aus 40 Teilen rohem DMMP, wie in Beispiel 1 verwendet, und 60 Teilen des Phosphats auf 70 °C; innerhalb 12–20 Stunden wird das Gemisch frei von Trimethylphosphit.

Beispiel 5

Man gibt 90 Teile 500 ppm Trimethylphosphit enthaltendes DMMP zu 10 Teilen des Phosphats des Beispiels 1. Nach 24 Stunden Stehenlassen bei Raumtemperatur ist das Gemisch völlig geruchlos.

Beispiel 6

Man wiederholt Beispiel 5, unter Einsatz von 1000 ppm Trimethylphosphit enthaltendem DMMP. Das Gemisch wird zwischen 24 und 48 Stunden geruchlos.

Beispiel 7

Man wiederholt Beispiel 6, jedoch unter Erhitzen des Gemischs auf 70 °C. Es wird innerhalb 20 Stunden völlig geruchlos.

Beispiele 8–11

Man wiederholt Beispiel 1, jedoch unter Ersatz des Phosphats durch die in der Tabelle angeführten Ester jeweils normaler handelsüblicher Qualität.

| Beispiel | Phosphatester | Ungefähre Zeit in Stunden bis zur Geruchlosigkeit | Temperatur °C |
|---|---|---|---|
| 8 | Trikresylphosphat | 48 | 23 |
| 9 | Trimethylphosphat | 48 | 23 |
| 10 | Trixylylphosphat | 24 | 70 |
| 11 | Diphenyl-isodecyl-phosphat | 24 | 70 |

Beispiele 12–17

Unter Verwendung der nachfolgenden Zusammensetzung stellt man geschäumte Polyurethanzusammensetzungen einer Schaumdichte von $30 \pm 1$ kg/m$^3$ her.

| | |
|---|---|
| Propylan RF (132[1] | 100 |
| Dimethylcyclohexylamin | 1,8 |
| α-Methylstyrol | 0,2 |
| Dabco 33LV[2] | 0,2 |
| Silikontensid | 2,0 |
| Trichlorfluormethan | 33 |
| Flammhemmstoff | wie angegeben |
| Isocon M[3] | 126,9 |

(1) Saccharose-propylenoxydkondensatpolyol-Propylan ist ein registriertes Warenzeichen

(2) Tertiärer Aminkatalysator-Dabco ist ein registriertes Warenzeichen

(3) Polymeres Diphenylmethan-diisocyanat-Isocon ist ein registriertes Warenzeichen

Die obigen Bestandteile werden bei Raumtemperatur mittels eines Schnellrührers (2000 UpM) miteinander vermischt, wobei man das Isocyanat zuletzt zugibt und dann sofort in eine Kartonform giesst. Man lässt den Schaum durch die einsetzende exotherme Reaktion frei aufsteigen. Der Zeitraum von der Zugabe des Isocyanats bis zum Auftreten einer sahneartigen Beschaffenheit des Gemischs ist als die Startzeit angegeben. Die erforderliche Zeit, bis der Schaum seine grösste Höhe erreicht, wird als die Steigzeit bezeichnet. Die Klebfreizeit bedeutet die Zeit, zu welcher der Schaum nicht mehr klebrig ist. Nach Erreichen der Klebfreizeit wird der Schaum 3 Tage bei Umgebungstemperatur gealtert.

Nach 3 Tagen Lagerung schneidet man Prüflinge aus dem Schaum und unterzieht diese der Grenzsauerstoffindexprüfung und der horizontalen Brennprüfung nach BS 4735. Die Ergebnisse sind unten angeführt, zusammen mit demselben, ohne Flammhemmstoff hergestellten Schaummaterial als Vergleich.

| Beispiel | 12 | 13 | 14 | 15 | 16 | 17 | |
|---|---|---|---|---|---|---|---|
| Produkt aus Beispiel | | | 1 | | 4 | | – |
| Produktmenge Flammhemmstoff | 5 | 10 | 20 | 5 | 10 | 20 | |
| Startzeit in s | | | 29 | | | 32 | 30 |
| Steigzeit in s | | | 120 | | | 100 | 110 |
| Klebfreizeit in s | | | 240 | | | 225 | 240 |
| Sauerstoffindex % | <21 | <21 | 21,8 | <21 | 21,6 | 22,4 | <21 |
| Brennlänge in mm bei der Prüfung nach BS 4735 | 95 | 34 | 17 | 45 | 20 | 10 | brennt |
| Brenngeschwindigkeit mm/s | 1,39 | 0,8 | 0,37 | 0,81 | 0,29 | 0,18 | |

Die in Beispielen 12–17 erhaltenen Schäume zeigen keine Spalten und keine Verzerrung.

Beispiele 18–22

Geschäumte Polyurethanzusammensetzungen werden wie in Beispielen 12–17 beschrieben hergestellt, jedoch unter Verwendung der folgenden Zusammensetzung:

Propylan RF 176[4] 100
Wasser 0,2
Silikontensid 2
Trichlorfluormethan 40
Flammhemmstoff wie angegeben
Isocon M 112,8

(4) Aromatisches Polyol

Aus diesen Schäumen schneidet man Prüflinge und untersucht diese auf Grenzsauerstoffindex und Verhalten bei der vertikalen Brennprüfung nach DIN 4102 B2. Die Ergebnisse sind in der nachfolgenden Tabelle angeführt, im Vergleich mit demselben, ohne Flammhemmstoff hergestellten Schaummaterial.

| Beispiel | 18 | 19 | 20 | 21 | 22 | |
|---|---|---|---|---|---|---|
| Produkt aus Beispiel | 1 | | 4 | | | |
| Produktmenge Flammhemmstoff | 30 | 10 | 15 | 20 | 30 | – |
| Startzeit in s | | | | | 19 | 17 |
| Steigzeit in s | | | | | 78 | 70 |
| Klebfreizeit in s | | | | | 153 | 120 |
| Sauerstoffindex % | 23,7 | 23,2 | 24,2 | 24,8 | 25,1 | <21 |
| Flammenhöhe in cm bei der Prüfung nach DIN 4102 B2 | 13 | 18 | 9 | 8 | 6 | brennt |

Die in Beispielen 18–22 erhaltenen Schäume zeigen keine Spalten und keine Verzerrung.

Beispiele 23–28

Unter Verwendung der folgenden Zusammensetzung werden geschäumte Polyurethanzusammensetzungen mit einer Schaumdichte von $36 \pm 1$ kg/m$^3$ hergestellt, wie in Beispielen 12–17 beschrieben:

| | |
|---|---|
| Propylan Rf 176 | 100 |
| Wasser | 1,1 |
| Polyurax SR 242[5] | 2,2 |
| Trichlorfluormethan | 35 |
| Flammhemmstoff | wie angegeben |
| Isocon M | 134,7 |

(5) Tensid-Polyurax ist ein registriertes Warenzeichen

Man schneidet Prüflinge aus diesen Schäumen und untersucht diese auf Grenzsauerstoffindex. Die Ergebnisse sind in der nachfolgenden Tabelle angeführt.

| Bei-spiel | Flammhemmstoff | Menge | Sauer-stoffindex |
|---|---|---|---|
| 23 | Produkt aus Beispiel 4 | 40 | 24,6 |
| 24 | Produkt aus Beispiel 4 | 37 | 25,5 |
| | Pentabromdiphenyläther | 3 | |
| 25 | Produkt aus Beispiel 4 | 40 | 26,5 |
| | Pentabromdiphenyläther | 10 | |
| 26 | Produkt aus Beispiel 4 | 26 | 25,1 |
| | Pentabromdiphenyläther | 14 | |
| 27 | Produkt aus Beispiel 4 | 26 | 25,0 |
| | Tetrabrombisphenol A | 14 | 25,0 |
| 28 | Produkt aus Beispiel 4 | 20 | 27 |
| | Dibromkresyl-glycidyläther | 20 | |

Die in Beispielen 23–28 erhaltenen Schäume zeigen keine Spalten und keine Verzerrung.

**Beispiel 29**

Man stellt geschäumte Polyurethanzusammensetzungen wie in Beispielen 12–17 beschrieben her, jedoch unter Verwendung von 10 Teilen Produkt aus Beispiel 4 und 10 Teilen Dibromneopentylglykol als Flammhemmstoff. Das Produkt besitzt einen Sauerstoffindex von 23,1% und zeigt keine Spalten und keine Verzerrung.

**Beispiele 30–31**

Man stellt geschäumte Polyurethanzusammensetzungen wie in Beispielen 18–22 beschrieben her, jedoch unter Verwendung der folgenden Flammhemmstoffe:

**Beispiel 30**

| | |
|---|---|
| Produkt aus Beispiel 4 | 13 Teile |
| Hexabromcyclododecan | 7 Teile |
| Sauerstoffindex 24,2% | |

**Beispiel 31**

| | |
|---|---|
| Produkt aus Beispiel 4 | 10 Teile |
| Dibromneopentylglykol | 10 Teile |
| Sauerstoffindex 24,9% | |

Die in Beispielen 30 und 31 erhaltenen Schäume zeigen keine Spalten und keine Verzerrung.

**Patentansprüche**

1. Feuerhemmende Zusammensetzungen für harte Polyurethan- oder Polyisocyanuratschäume, dadurch gekennzeichnet, dass sie aus Dimethyl-methylphosphonat, Diäthyl-äthylphosphonat oder einem Gemisch davon und einem Triarylphosphat, Trialkylphosphat oder Tri(Alkyl/Aryl)phosphat, jeweils mit 1–12 C-Atomen in den Alkylgruppen, im Gewichtsverhältnis 5:95 bis 95:5 bestehen.

2. Zusammensetzungen nach Anspruch 1, dadurch gekennzeichnet, dass das Phosphonat/Phosphatverhältnis 10:90 bis 40:60 beträgt.

3. Zusammensetzungen nach Anspruch 1, dadurch gekennzeichnet, dass in den Arylgruppen der Triaryl- oder Tri(Alkyl/Aryl)phosphate gegebenenfalls durch Alkylgruppen mit bis zu 9 Kohlenstoffatomen einfach oder mehrfach substituiertes Phenyl vorliegt.

4. Zusammensetzungen nach Anspruch 1, dadurch gekennzeichnet, dass die Alkylgruppen in den Trialkylphosphaten oder Tri(Alkyl/Aryl)-phosphaten geradkettig oder verzweigt sind und bis zu 12 Kohlenstoffatome aufweisen.

5. Zusammensetzungen nach Anspruch 1, dadurch gekennzeichnet, dass als Phosphat ein Triarylphosphat vorliegt.

6. Zusammensetzungen nach Anspruch 1, dadurch gekennzeichnet, dass sie ferner einen weiteren, halogenhaltigen Flammhemmstoff enthalten.

7. Zusammensetzungen nach Anspruch 6, dadurch gekennzeichnet, dass als halogenhaltiger Flammhemmstoff eine aliphatische oder aromatische bromhaltige Verbindung oder ein Chloralkylphosphat vorliegt.

8. Zusammensetzungen nach Anspruch 7, dadurch gekennzeichnet, dass sie 3 bis 100 Gew.-% Pentabromdiphenyläther, Dibromkresyl-glycidyläther, Tetrabrombisphenol A, Dibromneopentylglykol oder Tris-monochlorpropylphosphat, bezogen auf das Gewicht der Zusammensetzung nach Anspruch 1, enthalten.

9. Verfahren zur Herstellung von Zusammensetzungen nach Anspruch 1, dadurch gekennzeichnet, dass man Dimethyl-methylphosphonat, Diäthyl-äthylphosphonat oder ein Gemisch davon und ein Triarylphosphat, Trialkylphosphat oder Tri(Alkyl/Aryl)phosphat vermischt und nötigenfalls das Gemisch genügend lang bei einer Temperatur unterhalb seines Siedepunkts hält, um jeglichen Geruch nach Trimethylphosphit und/oder Triäthylphosphit zu entfernen.

10. Verfahren nach Anspruch 9, dadurch gekennzeichnet, dass man das Gemisch bei einer Temperatur zwischen Raumtemperatur und 70 °C hält.

11. Verfahren zur Herstellung von Polyurethanen oder Polyisocyanuraten durch Umsetzung eines Polyols mit einem Polyisocyanat, gegebenenfalls in Gegenwart eines Treibmittels, dadurch gekennzeichnet, dass man einem Reaktionspartner oder dem Reaktionsgemisch eine Zusammensetzung nach Anspruch 1 zusetzt.

12. Verfahren nach Anspruch 11, dadurch gekennzeichnet, dass die zugesetzte Menge dieser Zusammensetzung 5 bis 40 Gewichtsteile auf 100 Gewichtsteile Polymer beträgt.

13. Verfahren nach Anspruch 12, dadurch gekennzeichnet, dass die zugesetzte Menge dieser Zusammensetzung 10 bis 30 Gewichtsteile auf 100 Gewichtsteile Polymer beträgt.

14. Verfahren nach Anspruch 11, dadurch gekennzeichnet, dass das Polymer einen Isocyanatindex von 1 bis 1,5 aufweist.

## Revendications

1. Compositions ignifugeantes pour mousses dures à base de polyuréthannes ou de poly-isocyanurates, compositions caractérisées en ce qu'elles sont constituées de méthane-phosphonate de diméthyle, d'éthane-phosphonate de diéthyle ou d'un mélange de ces composés, et d'un phosphate de triaryle, d'un phosphate de trialkyle ou d'un phosphate de tris-(alkyle/aryle), dont les alkyles contiennent chacun de 1 à 12 atomes de carbone, dans un rapport pondéral compris entre 5:95 et 95:5.

2. Compositions selon la revendication 1, caractérisées en ce que le rapport phosphonate/phosphate est compris entre 10:90 et 40:60.

3. Compositions selon la revendication 1, caractérisées en ce que les radicaux aryles des phosphates de triaryles ou de tris-(alkyles/aryles) portent éventuellement chacun un ou plusieurs radicaux alkyles à au plus 9 atomes de carbone.

4. Compositions selon la revendication 1, caractérisées en ce que les radicaux alkyles des phosphates de trialkyles ou de tris-(alkyles/aryles) sont linéaires ou ramifiés et contiennent chacun au plus 12 atomes de carbone.

5. Compositions selon la revendication 1, caractérisées en ce que le phosphate est un phosphate de triaryle.

6. Compositions selon la revendication 1, caractérisées en ce qu'elles contiennent en outre un ignifugeant halogéné supplémentaire.

7. Compositions selon la revendication 6, caractérisées en ce que l'ignifugeant halogéné est un composé bromé aliphatique ou aromatique ou un phosphate de chloralkyle.

8. Compositions selon la revendication 7, caractérisées en ce qu'elles contiennent de 3 à 100% en poids d'oxyde de diphényle pentabromé, d'oxyde de glycidyle et de dibromocrésyle, de tétrabromo-bis-phénol A, de dibromo-néopentylglycol ou de phosphate de tris-(monochloropropyle), par rapport au poids de la composition selon la revendication 1.

9. Procédé pour préparer des compositions selon la revendication 1, procédé caractérisé en ce qu'on mélange le méthane-phosphonate de diméthyle, d'éthane-phosphonate de diéthyle ou un mélange de ces deux composés, et un phosphate de triaryle, un phosphate de trialkyle ou un phosphate de tris-(alkyle/aryle) et, si cela est nécessaire, on conserve le mélange suffisamment longtemps à une température inférieure à son point d'ébullition pour que toute odeur de phosphite de triméthyle et/ou de phosphite de triéthyle disparaisse.

10. Procédé selon la revendication 9, caractérisé en ce qu'on conserve le mélange à une température comprise entre la température ambiante et 70 °C.

11. Procédé de préparation de polyuréthannes ou de poly-isocyanurates par réaction d'un polyol avec un polyisocyanate, éventuellement en présence d'un porogène, procédé caractérisé en ce qu'on ajoute à un partenaire réactionnel ou au mélange réactionnel une composition selon la revendication 1.

12. Procédé selon la revendication 11, caractérisé en ce que la quantité de la composition que l'on ajoute est comprise entre 5 et 40 parties en poids pour 100 parties en poids du polymère.

13. Procédé selon la revendication 12, caractérisé en ce que la quantité de la composition que l'on ajoute est comprise entre 10 et 30 parties en poids pour 100 parties en poids du polymère.

14. Procédé selon la revendication 11, caractérisé en ce que le polymère a un indice d'isocyanate compris entre 1 et 1,5.

## Claims

1. A fire retardant composition for rigid polyurethane or polyisocyanurate foams, which composition comprises dimethyl methyl phosphonate, diethyl ethyl phosphonate or a mixture thereof and a triaryl phosphate, a trialkyl phosphate or tri(alkyl/aryl) phosphate, each alkyl group having 1 to 12 carbon atoms, in a ratio by weight of 5:95 ot 95:5.

2. A composition as claimed in claim 1, in which the ratio of phosphonate to phosphate is from 10:90 to 40:60.

3. A composition as claimed in claim 1, in which the aryl groups in the triaryl or tri(alkyl/aryl) phosphates are phenyl or phenyl substituted by one or more alkyl groups having up to 9 carbon atoms.

4. A composition as claimed in claim 1, in which the alkyl groups in the trialkyl phosphates or tri(alkyl/aryl) phosphates are straight chain or branched and have up to 12 carbon atoms.

5. A composition as claimed in claim 1, in which the phosphate is a triaryl phosphate.

6. A composition as claimed in claim 1, which also contains another flame retardant containing halogen.

7. A composition as claimed in claim 6, in which the flame retardant containing halogen is an aliphatic or aromatic bromine-containing compound or a chloroalkyl phosphate.

8. A composition as claimed in claim 7, which comprises from 3 to 100% by weight of pentabromodiphenyl ether, di-bromo cresyl glycidyl ether, tetrabromo bisphenol A, dibromo neopentyl glycol, or tris(monochloropropyl) phosphate, based on the weight of composition as claimed in claim 1.

9. A process for preparing a composition as claimed in claim 1, which comprises mixing dimethyl methyl phosphonate, diethyl ethyl phosphonate or a mixture thereof and a triaryl phosphate, a trialkyl phosphate or tri(alkyl/aryl) phosphate and, if necessary, maintaining the mixture at a temperature below its boiling point for sufficient time to remove any odour of trimethyl phosphite and/or triethyl phosphite.

10. A process as claimed in claim 9, in which the mixture is maintained at a temperature from ambient to 70 °C.

11. A method of preparing a polyurethane or polyisocyanurate by reacting a polyol with a polyisocyanate, optionally in the presence of a blowing agent, which comprises adding to a reactant or to the reaction mixture a composition as claimed in claim 1.

12. A method as claimed in claim 11, in which the amount of said composition added is from 5 to 40 parts by weight per 100 parts by weight of polymer.

13. A method as claimed in claim 12, in which the amount of said composition added is from 10 to 30 parts by weight per 100 parts by weight of polymer.

14. A method as claimed in claim 11, in which the polymer has an isocyanate index of from 1 to 1.5.